# EUROPÄISCHE PATENTANMELDUNG

(11) **EP 1 637 025 A1**
(43) Veröffentlichungstag der Anmeldung: **22.03.2006**
(21) Anmeldenummer: 05019623.7
(22) Anmeldetag: 09.09.2005
(51) Int. Cl.: A01C 7/08, A01C 7/20, A01C 5/06

(54) **Sämaschine**

(30) Priorität: 15.09.2004 DE 102004044559
(71) Anmelder: Amazonen-Werke H. Dreyer GmbH & Co. KG, 49205 Hasbergen (DE)
(72) Erfinder: Dreyer, Heinz, Dipl.-Ing. Univ. Dr.h.c., 49205 Hasbergen (DE)

(57) **Zusammenfassung**

Sämaschine bestehend aus einem sich auf den Boden auf Laufräder (4) abstützenden und eine Zugdeichsel (3) aufweisenden Vorratstank (1) und einem eine große Arbeitsbreite aufweisenden, zusammenfaltbaren und sich auf dem Boden auf Laufräder (7) abstützenden und eine Zugdeichsel (8) aufweisenden sowie mit Säscharen (10) bestückten Säscharrahmen (2), die im Zugverband hintereinander gekoppelt sind, wobei mittels eines Druckluftfördersystems (20,21,22) von dem zumindest annähernd druckdicht ausgebildeten Vorratstank (1) das sich im Vorratsbehälter befindliche körnige Material über eine Dosiereinrichtung in dosierter Weise über eine Verteileinrichtung (21) und Leitungen (22) den am Säscharrahmen (2) angeordneten Säscharen (10) zuleitbar ist. Um eine einfach aufgebaute Sämaschine mit großer Flächenleistung und einer möglichst gleichmäßigen Saatgutablage zu schaffen, ist vorgesehen, dass jedes Säschar (10) mittels einer parallelogrammartigen Halterung (12) am Säscharrahmen (2) in aufrechter Ebene bewegbar angeordnet und mittels zumindest einer am Säschar (10) angeordneten und auf der Bodenoberfläche abrollenden Tiefenführungsrolle (18) in der Eindringtiefe in den Boden geführt ist, dass die Säschare (10) als Meißelsäschare mit einem einen aufrecht verlaufenden Aufreißbereich aufweisenden Meißel (14) zum Reißen von Säfurchen in den Boden ausgebildet sind, dass der Meißel (14) auswechselbar am Scharkörper (13) des Meißelschars (10) angeordnet ist und auf seiner unteren Vorderseite eine Wolfram-Carbid-Platte (15) als Panzerungselement aufweist, dass die Säschare (10) in vier Querreihen hintereinander und seitlich versetzt zueinander und zwar derart in einer geraden und mit einem Winkel zur Fahrtrichtung (16) verlaufenden Linie angeordnet sind, so dass zwischen den Säscharen (10) von vorn nach schräg-hinten verlaufende freie Durchgangsbereiche (17) vorhanden sind.

## Beschreibung

Die Erfindung betrifft eine Sämaschine gemäß des Oberbegriffes des Patentanspruches 1.

Eine derartige Sämaschine ist beispielsweise durch die US 4 473 016 A bekannt. Diese Sämaschine besteht aus dem vorlaufenden sich auf Laufräder auf dem Boden abstützenden und mit Säscharen bestückten Scharrahmen und dem angekuppelten und sich ebenfalls auf Laufrädern abstützenden Vorratstank. Die Säschare sind an dem Scharrahmen mittels eines Gelenkes aufgehängt und werden mit einer Feder gegen einen Anschlag gedrückt, so dass sie während des normalen Betriebes sich nicht gegenüber dem Scharrahmen in der Höhe bewegen, sondern nur gegen Federkraft nach oben ausweichen, wenn die Säschare auf in dem Boden festsitzende Hindernisse treffen. Die Schare werden gemeinsam über die Laufräder des Scharrahmens in ihrer Eingriffstiefe in den Boden geführt. Hierdurch dringen die Schare auf unebenen Bodenoberflächen unterschiedlich tief in den Boden ein, so dass das Saatgut entweder zu tief oder zu flach abgelegt wird. Weiterhin sind die Schare einem großen Verschleiß ausgesetzt.

Der Erfindung liegt die Aufgabe zugrunde, eine einfach aufgebaute Sämaschine mit großer Flächenleistung und einer möglichst gleichmäßigen Saatgutablage zu schaffen.

Diese Aufgabe wird erfindungsgemäß durch das Kennzeichen des Patentanspruches 1 gelöst.

Infolge dieser Maßnahmen reißen die Meißel der Meißelsäschare in gleichmäßiger Tiefe in Bezug auf die Bodenoberfläche eine Säfurche in den Boden, weil jedes Säschar durch die an dem Meißelsäscharen angeordneten Tiefenführungsrollen in der Höhe gegenüber der Bodenoberfläche geführt wird. Durch die Aufhängung der Säschare mittels einer parallelogrammartigen Halterung am Scharrahmen können die Meißelschare sich auf und ab bewegen und so durch die Tiefenführungsrollen exakt in der Tiefe geführt werden. Durch das Panzerungselement auf der unteren Vorderseite wird eine hohe Standzeit des Meißels erreicht. Aufgrund der Anordnung der Säschare in vier Querreihen und seitlich versetzt zueinander, ergeben sich schräg nach hinten verlaufende freie Durchgangsbereiche, so dass auch bei dem Einsatz der Sämaschine auf mit Stroh bedeckten Bodenoberflächen diese nicht zum verstopfen neigt.

Um zu erreichen, dass die von dem Meißelsäscharen gezogenen Säfurchen geschlossen und die in der Säfurche abgelegten Saatkörner mit Boden bedeckt werden, ist vorgesehen, dass die Tiefenführungsrollen schräg zur Fahrtrichtung angestellt sind. Durch die Tiefenführungsrollen werden Bodenteile in die Säfurche zurückgeschoben.

Ein besonders gutes Schließen der Säfurche lässt sich dadurch erreichen, dass an jedem Säschar zwei entgegengesetzt schräg zur Fahrtrichtung angestellte Tiefenführungsrollen angeordnet sind.

Um Beschädigungen der Säschare auf steinigen Böden zu vermeiden, ist vorgesehen, dass die parallelogrammartige Halterung der Säschare eine Steinsicherung aufweist.

Um die Arbeit der Tiefenführungsrollen an die Bodenverhältnisse anpassen zu können und um optimale Arbeitsergebnisse zu erzielen, ist vorgesehen, dass die Tiefenführungsrollen an dem Scharkörper einstellbar angeordnet sind.

Um mit Sämaschinen mit großer Arbeitsbreite auch auf harten Bodenoberflächen, bei denen mit einem Spuranreißer keine Leitspur gezogen werden kann, genau Anschlussfahren zu können ist vorgesehen, dass eine satelliten gestützte Vorrichtung zum genauen parallelen Anschlussfahren für nebeneinander liegende Bearbeitungsstreifen vorgesehen ist. Hierdurch kann mittels einer Anzeigevorrichtung der satellitengestützten Vorrichtung ein genaues paralleles Anschlussfahren erreicht werden.

Weitere Einzelheiten der Erfindung sind den übrigen Unteransprüchen, der Beispielsbeschreibung und den Zeichnungen zu entnehmen.

Hierbei zeigen
- Fig. 1: den mit Säscharen bestückten Scharrahmen der Sämaschine in Seitenansicht und in Prinzipdarstellung,
- Fig. 2: den Vorratstank mit Laufrädern mit Zugdeichsel in Seitenansicht und Prinzipdarstellung,
- Fig. 3: die aus Vorratstank und Scharrahmen bestehende Sämaschine in Seitenansicht und in Prinzipdarstellung und
- Fig. 4: den Scharrahmen in der Draufsicht und in Prinzipdarstellung, wobei die Verteilereinrichtungen nicht dargestellt sind.

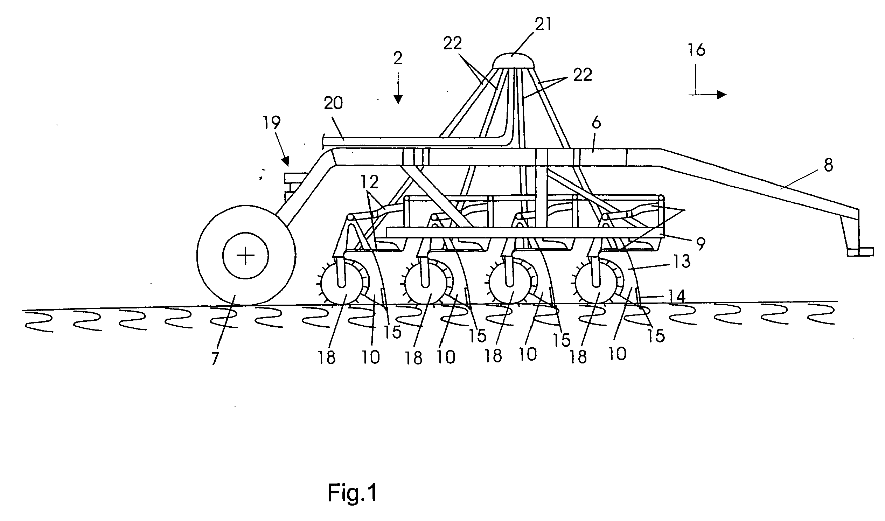

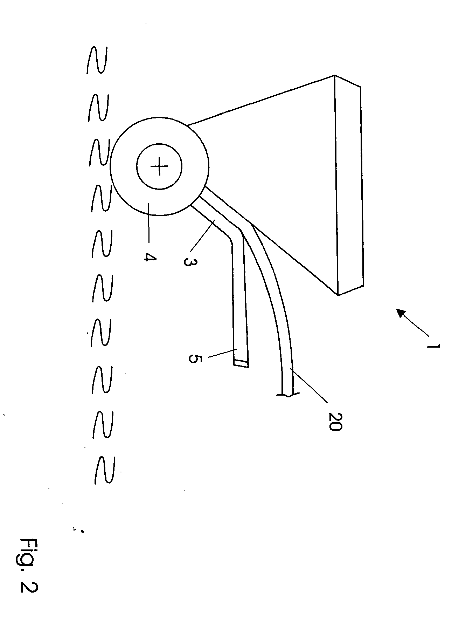

Die Sämaschine besteht aus dem Vorratstank 1 entsprechend Fig. 2 und dem Säscharrahmen 2 entsprechend Fig. 1. Der Vorratstank 1 weist einen Rahmen 3 auf, an dem die Laufräder 4 und die Zugdeichsel 5 angeordnet sind. Über die Laufräder 4 stützt sich der Vorratstank 1 auf dem Boden ab.

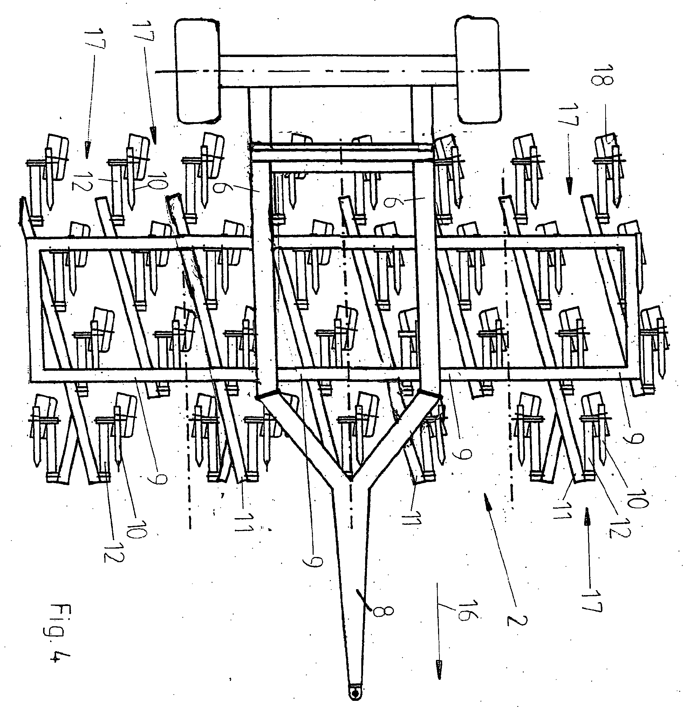

Der Säscharrahmen 2 gemäß Fig. 1 weist den Tragrahmen 6 mit den Laufrädern 7 und der Zugdeichsel 8 auf. An dem Tragrahmen 6 sind Teilsegmente 9 des zusammenfaltbaren Säscharrahmens 2 angeordnet. Der Säscharrahmen 2 kann je nach zu bestellender Fläche eine entsprechend große Breite aufweisen. Er besteht dann aus mehreren Teilsegmenten 9, die mittels Gelenken miteinander verbunden sind, so dass der Scharrahmen 2 mit den daran angeordneten Säscharen 10 zusammenfaltbar ist, um eine relativ schmale Transportbreite zu erhalten. An dem Säscharrahmen 2 sind schräg zur Fahrtrichtung verlaufende Tragbalken 11 angeordnet, an welchem mittels parallelogrammartiger Halterungen 12 die einen Scharkörper 13 aufweisenden Meißelsäschare 10 angeordnet sind. Mittels der parallelogrammartigen Halterung 12 können die Säschare 10 sich gegenüber dem Scharrahmen 2 in aufrechter Ebene auf und ab bewegen. Die Meißelsäschare 10 weisen auf ihrer vorderen unteren Seite an ihren Scharkörpern 13 in austauschbarer Weise angeordnete Meißel 14 auf. Auf der unteren Vorderseite des Meißels ist als Panzerungselement eine Wolfram-Carbid-Platte 15 angeordnet. Die Säschare 10 sind in vier Querreihen hintereinander und seitlich versetzt zueinander angeordnet, wie die Fig. 4 zeigt. Die Säschare 10 sind derart angeordnet, dass wie Fig. 4 zeigt, in einer geraden und mit einem Winkel zur Fahrtrichtung 16 verlaufenden Linie angeordnet sind. Hierdurch ergeben sich zwischen den Säscharen 10 von vorn nach schräg-hinten verlaufende freie Durchgangsbereiche 17 zwischen den Säscharen 10, so dass eine große Verstopfungsunanfälligkeit auch bei dem Einsatz der Sämaschine auf mit Stroh bedeckten Oberflächen sich ergibt.

An dem Scharkörper 13 ist auf der Rückseite jeweils eine schräg zur Fahrtrichtung 16 angestellte Tiefenführungsrolle 18 angeordnet. Es ist auch möglich, an jedem Säschar 10 zwei entgegengesetzte schräg zur Fahrtrichtung 16 angestellte Tiefenführungsrollen vorzusehen, die dann in bevorzugter Weise in Draufsicht gesehen ein nach vorn sich öffnendes V bildet. Damit die Säschare 10 nach hinten ausweichen können, wenn sie auf im Boden festsitzende Hindernisse treffen, weist die parallelogrammartige Halterung 12 der Säschare 10 eine Steinsicherung auf. Diese Steinsicherung ermöglicht die vorbeschriebene Ausweichbewegung der Säschare 10.

Die Tiefenführungsrollen 18 sind in nicht dargestellter Weise in einstellbarer Weise am Scharkörper 13 angeordnet.

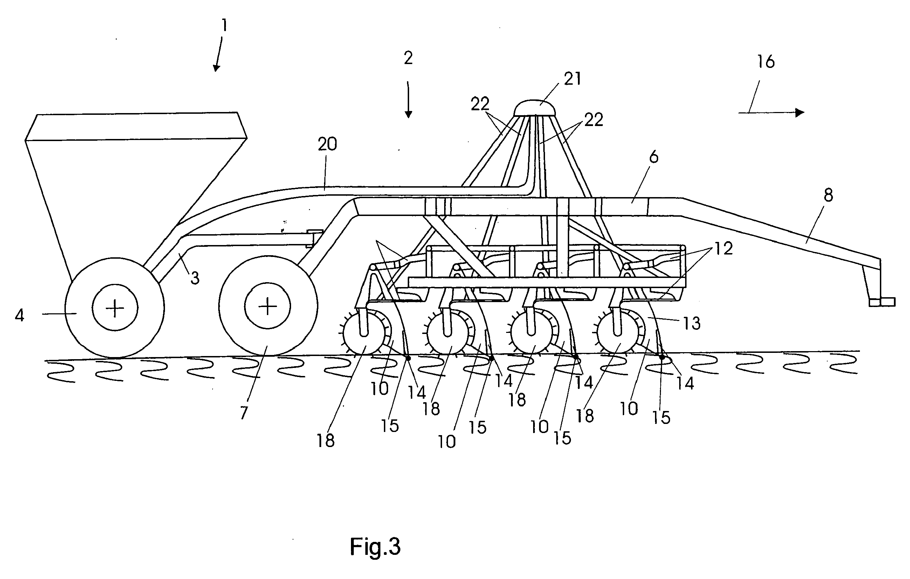

Der Vorratsbehälter 1 und der Scharrahmen 2 sind im Zugverband miteinander gekoppelt und zwar im Ausführungsbeispiel, wie es in Fig. 3 dargestellt ist, ist die Zugdeichsel 8 des Scharrahmens 2 an der Zugkupplung des Schleppers angekuppelt, während die Zugdeichsel 5 des Vorratstanks 1 an der Zugkupplung 19 des Scharrahmens 2 angekuppelt ist.

Es ist jedoch auch möglich, die Zugdeichsel des Vorratstanks an der Zugdeichsel des Schleppers anzukuppeln und die Zugdeichsel des Scharrahmens an der Zugkupplung des Vorratstanks.

Von dem Vorratsbehälter 1, wird über eine nicht dargestellte Dosiereinrichtung in einstellbaren Mengen das sich im Vorratsbehälter 1 befindliche Gut in eine pneumatisch beaufschlagte Förderleitung 20 eingespeist und über diese Förderleitung 20 zu Verteilerköpfen 21 zugeführt, von wo es auf die einzelnen zu den Säscharen 10 führenden Leitungen 22 aufgeteilt wird.

In nicht dargestellter Weise ist die Sämaschine mit einer satellitengestützten Vorrichtung zum genauen parallelen Anschlussfahren für nebeneinander liegende Bearbeitungsstreifen ausgerüstet. Um den Fahrer eine Hilfe zu geben, so dass er genau Anschlussfahren kann, weist diese Vorrichtung eine Anzeigevorrichtung auf, die im Sichtfeld des Fahrers auf dem Schlepper angeordnet ist, auf welchem angezeigt wird, ob er exakt Anschluss fährt oder von der vorgesehenen Spur abweicht, so dass er dann entsprechend seine Fahrspur korrigieren kann.

## Patentansprüche

1. Sämaschine bestehend aus einem sich auf den Boden auf Laufräder abstützenden und eine Zugdeichsel aufweisenden Vorratstank und einem eine große Arbeitsbreite aufweisenden, zusammenfaltbaren und sich auf dem Boden auf Laufräder abstützenden und eine Zugdeichsel aufweisenden sowie mit Säscharen bestückten Säscharrahmen, die im Zugverband hintereinander gekoppelt sind, wobei mittels eines Druckluftfördersystems von dem zumindest annähernd druckdicht ausgebildeten Vorratstank das sich im Vorratsbehälter befindliche körnige Material über eine Dosiereinrichtung in dosierter Weise über eine Verteileinrichtung und Leitungen den am Säscharrahmen angeordneten Säscharen zuleitbar ist, **dadurch gekennzeichnet, dass** jedes Säschar (10) mittels einer parallelogrammartigen Halterung (12) am Säscharrahmen (2) in aufrechter Ebene bewegbar angeordnet und mittels zumindest einer am Säschar (10) angeordneten und auf der Bodenoberfläche abrollenden Tiefenführungsrolle (18) in der Eindringtiefe in den Boden geführt ist, dass die Säschare (10) als Meißelsäschare mit einem einen aufrecht verlaufenden Aufreißbereich aufweisenden Meißel (14) zum Reißen von Säfurchen in den Böden ausgebildet sind, dass der Meißel (14) auswechselbar am Scharkörper (13) des Meißelschars (10) angeordnet ist und auf seiner unteren Vorderseite eine Wolfram-Carbid-Platte (15) als Panzerungselement aufweist, dass die Säschare (10) in vier Querreihen hintereinander und seitlich versetzt zueinander und zwar derart in einer geraden und mit einem Winkel zur Fahrtrichtung (16) verlaufenden Linie angeordnet sind, so dass zwischen den Säscharen (10) von vorn nach schräg-hinten verlaufende freie Durchgangsbereiche (17) vorhanden sind.

2. Sämaschine nach Anspruch 1, **dadurch gekennzeichnet, dass** die Tiefenführungsrollen (18) schräg zur Fahrtrichtung (16) angestellt sind.

3. Sämaschine nach Anspruch 2, **dadurch gekennzeichnet, dass** an jedem Säschar zwei entgegengesetzt schräg zur Fahrtrichtung angestellte Tiefenführungsrollen angeordnet sind.

4. Sämaschine nach Anspruch 1, **dadurch gekennzeichnet, dass** die parallelogrammartige Halterung (12) der Säschare (10) eine Steinsicherung aufweist.

5. Sämaschine nach Anspruch 3, **dadurch gekennzeichnet, dass** die Tiefenführungsrollen (18) an dem Scharkörper (13) einstellbar angeordnet sind.

6. Sämaschine nach Anspruch 1, **dadurch gekennzeichnet, dass** eine satelliten gestützte Vorrichtung zum genauen parallelen Anschlussfahren für nebeneinander liegende Bearbeitungsstreifen vorgesehen ist.

7. Sämaschine nach Anspruch 1, **dadurch gekennzeichnet, dass** die Zugdeichsel (8) des Scharrrahmens (2) an der Zugkupplung des Schleppers angekuppelt ist, und dass die Zugdeichsel (5) des Vorratstanks (1) an der Zugkupplung (19) des Scharrahmens (2) angekuppelt ist.

8. Sämaschine nach Anspruch 1, **dadurch gekennzeichnet, dass** die Zugdeichsel des Vorratstanks an der Zugkuppel des Schleppers angekuppelt ist, und dass die Zugdeichsel des Scharrahmens an der Zugkuppel des Vorratstanks angekuppelt ist.
